# EUROPÄISCHE PATENTSCHRIFT

(11) **EP 2 890 729 B1**
(45) Veröffentlichungstag und Bekanntmachung des Hinweises auf die Patenterteilung: **01.01.2020**
(21) Anmeldenummer: 13763185.9
(22) Anmeldetag: 04.09.2013
(51) Int. Cl.: C08G 77/62, C04B 35/589

(54) **VERFAHREN ZUR HERSTELLUNG VON THERMOPLASTISCHEN PRÄKERAMISCHEN POLYMEREN**
PROCESS FOR THE PRODUCTION OF THERMOPLASTIC PRECERAMIC POLYMERS
PROCÉDÉ DE FABRICATION DE POLYMÈRES THERMOPLASTIQUES PRÉCÉRAMIQUES

(30) Priorität: 30.08.2012 EP 12006145
(43) Veröffentlichungstag der Anmeldung: 08.07.2015
(73) Patentinhaber: Clariant Finance (BVI) Limited, Road Town, Tortola (VG)
(72) Erfinder: RICHTER, Frank, 65929 Frankfurt (DE); KRICHEL, Matthias, 63071 Offenbach am Main (DE); DECKER, Daniel, 65835 Liederbach a. Ts. (DE); MOTZ, Guenter, 95448 Bayreuth (DE); SCHMALZ, Thomas, 95478 Kemnath (DE)
(74) Vertreter: Jacobi, Carola
(86) Internationale Anmeldenummer: PCT/EP2013/002645
(87) Internationale Veröffentlichungsnummer: WO 2014/032817

(56) Entgegenhaltungen:
- US-A- 5 010 157
- US-A- 5 198 488
- US-A1- 2004 076 573
- US-A1- 2010 112 749
- US-B1- 6 329 487

## Beschreibung

### Einleitung

Das Gebiet der keramischen Materialien lässt sich grundsätzlich in die für Gebrauchs- und Sanitärkeramiken verwendeten Silicate und die für Ingenieurskeramiken verwendeten Hochleistungskeramiken unterteilen (Ralf Riedel, Aleksander Gurlo, Emanuel lonescu, "Chem. Unserer Zeit", 2010, 44, 208 - 227). Zu den Hochleistungskeramiken zählen Keramiken, die auf Basis von oxydischen Materialien (z. B. Al₂O₃) und nichtoxydischen Materialien hergestellt werden.

Hier wären z. B. Siliziumnitrid (Si₃N₄) und Siliziumcarbonitrid (SiCN) basierte Keramiken zu nennen, welche herausragende thermomechanische Eigenschaften besitzen. So wird z. B. in Abhängigkeit von der Stöchiometrie der Zusammensetzung der Siliziumcarbonitride keine Tendenz zum Kristallisieren bis ca. 1350 °C in einer inerten Atmosphäre gefunden (Christoph Konetschny, Dusan Galusek, Stefan Reschke, Claudia Fasel, Ralf Riedel, "Journal of the European Ceramic Society", 19, 1999, Seiten 2789 - 2769). An Luft reicht deren Stabilität bis 1500°C.

Hochleistungskeramiken wie z. B. Si₃N₄ und SiCN Keramiken werden aufgrund ihrer Eigenschaften zunehmend in den Bereichen der Hochtemperaturanwendungen (Energietechnik, Automobilbau, Raumfahrt, etc.), der Medizintechnik, der Materialbearbeitung, in der chemischen Verfahrenstechnik oder aber als Funktionswerkstoff in der Mikroelektronik eingesetzt.

Die Herstellung keramischer Bauteile erfolgt im Allgemeinen über eine pulvertechnologische Verarbeitung. Damit ist gemeint, dass dem Ausgangsstoff in Pulverform eine Form gegeben wird, die im Anschluss verdichtet wird, ohne dass es dabei zum Aufschmelzen kommt (Sintern).

Für rein metalloxid- und nitrid-basierte Keramiken kann ausschließlich diese Methode verwendet werden, da der Schmelzpunkt dieser keramischen Materialien für eine Verarbeitung zu hoch ist oder sich das Material vorher zersetzt. Eine Verarbeitung durch klassische, industriell verbreitete, formgebende Technologien, wie z. B. Spritzguss oder konventionelle Gießverfahren unter Verwendung von flüssigen oder geschmolzenen Materialien wäre wünschenswert, da dadurch Taktzeiten enorm verringert, der Materialverbrauch erniedrigt und zusätzlich energiesparend gearbeitet werden könnte.

Für die Herstellung von nichtoxidischen keramischen Materialien im System Silizium-Kohlenstoff-Stickstoff (SiCN) sind hingegen präkeramische, siliziumbasierte Polymere bekannt. Damit diese präkeramischen Polymere in industriellen, kontinuierlichen Prozessen Verwendung finden, müssen deren Eigenschaften reproduzierbar und über einen langen Zeitraum stabil sein.

Eine kommerzielle Verfügbarkeit der entsprechenden Ausgangsstoffe wird vorausgesetzt. Gleichzeitig ist eine ressourcenschonende und somit kostengünstige Umwandlung für einen breiten industriellen Einsatz ausschlaggebend.

Die einzigen präkeramischen Polymere für die Herstellung von SiCN-Keramiken, die die Anforderungen nach kommerzieller Verfügbarkeit im Tonnenmaßstab zu akzeptablen Preisen erfüllen, ist die Gruppe der Organopolysilazane (OPSZ), nachfolgend als Polysilazane bezeichnet. Polysilazane (z. B. KiON ML 33 und KiON HTT 1800) können derzeit von AZ Electronic Materials und Clariant bezogen werden. Die Herstellung erfolgt wie in EP 1232162 B1 beschrieben durch das Flüssig-Ammoniak-Verfahren.

Polysilazane, die nach EP 1232162 B1 (US 6,329,487) hergestellt werden, sind flüssig, niedrig viskos (< 50 mPa*s) und besitzen ein relativ niedriges Molekulargewicht (< 2500 g/mol). Flüssige Polysilazane haben grundsätzlich den entscheidenden Nachteil, dass deren Anwendung mit bestimmten, oben bereits erwähnten Verarbeitungstechniken nicht möglich ist. Die klassischen Verarbeitungstechniken der Polymerindustrie (z. B. Extrusion) sind ebenfalls nicht möglich. Ein weiterer Nachteil der flüssigen Polysilazane, wie sie durch EP 1232162 B1 beschrieben werden, liegt in ihrem vergleichsweise geringen Molekulargewicht. Dieser ist letztendlich für eine niedrige keramische Ausbeute verantwortlich. Es ist deshalb wünschenswert, daraus höhermolekulare, feste und schmelzbare Polysilazane herzustellen. Weiterhin werden in US 2010/112749, US 5,198,488 unterschiedliche Verfahren zur Herstellung von präkeramischen Polysilazanen beschrieben. US 2004/0076573 befasst sich mit der Behandlung von Nebenprodukten, die bei der Polysilazan-Herstellung durch Ammonolyse anfallen.

Es besteht somit ein dringender Bedarf nach einer Methode, welche, ausgehend von den oben beschriebenen, flüssigen, niedrigviskosen Polysilazanen, höhermolekulare feste und schmelzbare Polysilazane bereitstellt. Diese Methode sollte reproduzierbare Polymere liefern, die thermisch stabil, schmelzbar und löslich sind sowie ein hohes Molekulargewicht besitzen. Sie sind mindestens 12 Monate lagerstabil und lassen sich mit industriellen Methoden verarbeiten. Hierfür seien beispielhaft genannt: Extrusion, Spritzguss, Schmelzspinnen, Kalandrieren, Folien- und Hohlkörperblasen, Rotationsformen, Wirbelsintern, Flammspritzen und Spritzpressen (RTM bzw. DP-RTM).

In der Literatur sind verschiedenste Methoden dokumentiert, um flüssige, silazanbasierte, präkeramische Polymere in feste Precusoren zu überführen.
- Die Verwendung von festen, basischen Katalysatoren spielt dabei eine große Rolle. So beschreibt EP 332357 A1 die Verwendung von Alkoxiden, um das Molekulargewicht der flüssigen Ausgangsstoffe zu erhöhen und feste Produkte zu erhalten.
- Zwar werden damit Produkte erhalten, deren keramische Ausbeute höher als die der Ausgangsstoffe ist, jedoch ist die Reproduzierbarkeit der Methode begrenzt, die Produkte sind hochvernetzt und damit oft unlöslich und nicht schmelzbar, eine Weiterverarbeitung somit nur unzureichend möglich.
- Die Verwendung von lewissauren Substanzen ist ebenso bekannt. Dies eignet sich jedoch nicht für die kommerziell verfügbaren Rohstoffe, da sie zu unschmelzbaren Produkten führt.
- Eine weitere Methode zum Erhöhen des Molekulargewichts besteht in der Einwirkung von Übergangsmetallkomplexen, speziell der Verwendung von Ru-Carbonylen wie von Y. Blum oder von Z. Xie, X. Hu, Z. Fan, W. Peng, X. Li, W. Gao, X. Deng, Q. Wang beschrieben. Auch hier wird ein hochvernetztes Polymer erhalten, dessen keramische Ausbeute zwar hoch ist, aber nicht weiterverarbeitet werden kann, da das Produkt nicht löslich und nicht schmelzbar ist. Die Anwendung auf kommerziell verfügbare Polysilazane gelang nicht, es wurde keine Veränderung des Molekulargewichts oder des Aggregatzustands beobachtet.
- Ebenso werden gasförmige Substanzen zur Erhöhung des Molekulargewichtes von Polysilazanen eingesetzt. Hier kommen z. B. BH₃ (US 5262553 A), Gasgemische bestehend aus NH₃-H₂O (EP 412915 A1), HCl und HBr-Gemische oder aber Ozon zum Einsatz.
- Für den sogenannten ABSE Precursor (Polycarbosilazan, Ammonolysiertes Bissilylethan) wird eine Reaktionskombination aus Hydrosilylierung, Ammonolyse und anschließender thermischen Nachbehandlung beschrieben (S. Kokott, G. Motz, "Soft Materials" (2007), Volume Date 2006, 4 (2 - 4), 165 - 174). Der ABSE Precursor ist nicht kommerziell verfügbar und durch die thermische Nachbehandlung können die Eigenschaften nicht reproduzierbar eingestellt werden.
- Sehr zeitig wurde von Müller und Rochow die Verwendung von Ammoniumsalzen beschrieben (Carl R. Krüger, Eugene G. Rochow, "Journal of Polymer Science", Part A, Vol. 2 (1964), Seite 3179). Flüssige Polysilazane werden in Anwesenheit von NH₄Cl, NH₄Br oder NH₄l stark erhitzt, um wachsartige Produkte zu erhalten. Corriu (R.J.P. Corriu, D. Leckercq, P.H. Mutin, J.M. Planeix, A. Vioux, "Journal of Organometallic Chemistry", 406, 1991, S. C1) benutzt Bu₄NF und findet eine Erhöhung des Molekulargewichts. In diesen Fällen werden letztendlich unlösliche und unschmelzbare Produkte (Duromere) erhalten. Eine Weiterverarbeitung gelingt nicht.

Zusammenfassend kann gesagt werden, dass alle beschriebenen Verfahren die Forderung nach einer reproduzierbaren Methode, welche feste, hochmolekulare Polymere, die löslich und schmelzbar sind, nicht erfüllen bzw. für ein industrielles Verfahren unter Verwendung von kommerziell verfügbaren Rohstoffen nicht geeignet sind.

Überraschenderweise wurde nun gefunden, dass durch die Kombination aus speziellem Reaktionsmedium, definierter Menge Katalysator, der zeitlich exakt gesteuerten Verwendung eines Abstopp-Reagenzes, den definiert eingestellten Konzentrationen der Ausgangsstoffe und der Reaktionstemperatur flüssige, kommerziell verfügbare Polysilazane reproduzierbar in feste, schmelzbare und lösliche Produkte überführt werden können. Das Verfahren zeichnet sich dadurch aus, dass durch Variation der Reaktionsbedingungen die Eigenschaften des Polymers (Molekulargewicht, Erweichungsbereich) der festen Produkte exakt einstellbar werden.

Die Erfindung betrifft daher ein Verfahren zur Herstellung von hochmolekularen, festen, schmelzbaren, thermoplastischen präkeramischen Polymeren durch Umsetzung von flüssigen niedermolekularen Polysilazanen in einem Lösungsmittel, in Gegenwart eines Katalysators unter Abstoppung der Reaktion mit einem Abstoppreagenz sobald der gewünschte Polymerisationsgrad erreicht ist. Als Stoppreagenz kommen dabei: Hydride ausgewählt aus der Gruppe KH, NaH, LiH, CaH₂, LiAlH₄, Ca(BH₄)₂ und NaBH₄ zum Einsatz.

Als flüssige, niedermolekulare Polysilazane werden vorzugsweise Polysilazane oder eine Mischung von Polysilazanen der allgemeinen Formel (1)

-(SiR'R"-NR"')ₙ- (1)

eingesetzt,
wobei R', R", R'" gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt
und n so bemessen ist, dass das Polysilazan ein zahlenmittleres Molekulargewicht von 150 bis 150.000 g/mol aufweist.

Besonders geeignet sind dabei solche Polysilazane, in denen R', R", R"' unabhängig voneinander für einen Rest aus der Gruppe Wasserstoff, Methyl, Ethyl, Propyl, iso-Propyl, Butyl, iso-Butyl, tert.-Butyl, Phenyl, Tolyl, Vinyl oder 3-(Triethoxysilyl)-propyl, 3-(Trimethoxysilylpropyl) stehen.

In einer bevorzugten Ausführungsform werden Perhydropolysilazane der Formel (2) verwendet. 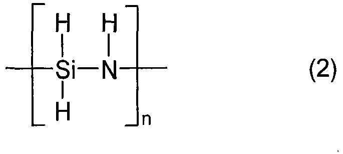 wobei es sich bei n um eine ganze Zahl handelt und n so bemessen ist, dass das Polysilazan ein zahlenmittleres Molekulargewicht von 150 bis 150.000 g/mol aufweist.

In einer weiteren bevorzugten Ausführungsform werden als Ausgangsreagenzien Polysilazane der Formel (3) eingesetzt,

-(SiR'R"-NR"')ₙ-(SiR*R**-NR***)ₚ- (3)

wobei R', R", R"', R*, R** und R*** unabhängig voneinander für Wasserstoff oder einen gegebenenfalls substituierten Alkyl-, Aryl-, Vinyl oder (Trialkoxysilyl)alkylRest stehen, wobei n und p so bemessen sind, dass das Polysilazan ein zahlenmittleres Molekulargewicht von 150 bis 150.000 g/mol aufweist.

Insbesondere bevorzugt sind Verbindungen in denen
- R', R"' und R*** für Wasserstoff und R", R* und R** für Methyl stehen;
- R', R'" und R*** für Wasserstoff und R", R* für Methyl und R** für Vinyl stehen;
- R', R"', R* und R*** für Wasserstoff und R" und R** für Methyl stehen.

Als Beispiel sei dies für die verwendeten Rohstoffe KiON ML33 und HTT 1800 gezeigt:

| | | |
|---|---|---|
| KiON ML 33: | R' = H, R" = Methyl, R"'= H | 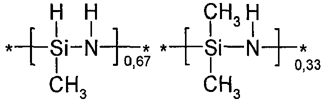 |
| | R* = R** = Methyl, R*** = H | |
| | n = 0,67 | |
| | p = 0,33 | |
| | | |
| KiON HTT 1800: | R' = H, R" = Methyl, R"'= H | 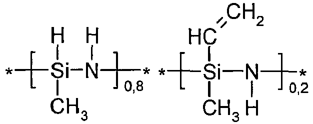 |
| | R* = Methyl, R** = Vinyl, R*** = H | |
| | n = 0,8 | |
| | p = 0,2 | |

Ebenfalls bevorzugt werden Polysilazane der Formel (4) eingesetzt

-(SiR'R"-NR"')ₙ-(SiR*R**-NR***)ₚ -(SiR¹, R²-NR³)q- (4)

wobei R', R", R'", R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei n, p und q so bemessen sind, dass das Polysilazan ein zahlenmittleres Molekulargewicht von 150 bis 150.000 g/mol aufweist.

Insbesondere bevorzugt sind Verbindungen in denen
R', R'" und R*** für Wasserstoff und R", R*, R** und R² für Methyl, R³ für (Triethoxysilyl)propyl und R¹ für Alkyl oder Wasserstoff stehen.

Die Konzentration der verwendeten Polysilazanrohstoffe im Reaktionsmedium wird so gewählt, dass eine genügende Durchmischung gewährleistet ist. Hierbei ist der Konzentrationsbereich von 20 bis 80 Gew.-% zu wählen. Besonders bevorzugt wird der Bereich von 30 bis 70 Gew.-%, ganz besonders bevorzugt der Bereich von 33 - 66 Gew.-%.

Als Reaktionsmedium eignen sich besonders organische Lösemittel, die kein Wasser sowie keine reaktiven Gruppen (wie Hydroxyl- oder Amingruppen) enthalten. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen aus diesen Lösemitteln.

Als Reaktionsmedium kommen insbesondere aprotrische Lösungsmittel, wie z. B. zum Einsatz: Diethylether, Cyclohexan, HMPTA, THF, Toluol, chlorierte Kohlenwasserstoffe, Pentan, Hexan und Dibutylether zum Einsatz. Besonders bevorzugt sind THF, Toluol, chlorierte Kohlenwasserstoffe, Diethylether und Dibutylether.

Das Verfahren kann im Temperaturbereich von - 20 °C bis 110 °C durchgeführt werden, bevorzugt wird der Bereich zwischen 0 und 80 °C, ganz besonders bevorzugt ist der Temperaturbereich zwischen 15 und 50 °C.

Das Verfahren kann im Druckbereich von 300 mbar bis 30 bar durchgeführt werden, bevorzugt wird der Bereich zwischen 500mbar und 5 bar, ganz besonders bevorzugt ist der Druckbereich zwischen 750 mbar und 3 bar.

Als Katalysator werden die Chloride, Bromide, lodide, Fluoride und Hydroxide von tetraalkylsubstituierten Ammoniumsalzen verwendet. Es seien beispielsweise genannt: Tetramethylammoniumchlorid, Tetramethylammoniumbromid, Tetramethylammoniumiodid, Tetramethylammoniumfluorid, Tetraethylammoniumchlorid, Tetraethylammoniumbromid, Tetraethylammoniumiodid, Tetraethylammoniumfluorid, Tetrabutylammoniumchlorid, Tetrabutylammoniumbromid, Tetrabutylammoniumiodid, Tetrabutylammoniumfluorid aber auch Schwesingers Katalysator und Phasentransferkats (PiP). Besonders bevorzugt werden Tetrabutylammoniumsalze und Schwesingers Reagenz.

Die Konzentration des Katalysators sollte bevorzugt im Bereich von 0,01 Gew.-% bis 10 Gew.-% gewählt werden. Insbesondere bevorzugt werden Konzentrationen zwischen 0,1 Gew.-% und 5 Gew.-%. Ganz besonders bevorzugt ist der Bereich zwischen 0,15 Gew.-% und 2 Gew.-%.

Während der Reaktion entstehen gasförmige Produkte (Wasserstoff, Ammoniak, Silane). Es ist deshalb zweckmäßig, die Zugabe des Katalysators zeitlich gesteuert durchzuführen. So ist eine Zugabe innerhalb von 10 bis 200 min bevorzugt, der Bereich zwischen 20 und 100 ganz besonders.

Es ist zweckmäßig das Verfahren unter Schutzgas durchzuführen, da die verwendeten Silazane oxidations- und hydrolyseanfällig sind.

Als Stoppreagenz kommen Hydride aus der Gruppe KH, NaH, LiH, CaH₂, LiAlH₄, Ca(BH₄)₂ und NaBH₄ zum Einsatz. Bevorzugt werden NaH, LiAlH₄, NaBH₄ und Ca(BH)₄ eingesetzt.

Das Stoppreagenz muss zeitlich exakt und in gelöster Form zugesetzt werden. Als Lösemittel für das Stoppreagenz eignen sich insbesondere die als Reaktionsmedium erwähnten Stoffe. Die Konzentration der Stoppreagenzien in den Lösungen sollte zwischen 2 und 70 %, bevorzugt zwischen 3 und 30 % und ganz besonders bevorzugt zwischen 5 und 10 %. Der Zeitpunkt der Zugabe des Stoppreagenz kann durch die Verfolgung des entstehenden Wasserstoffgas bestimmt werden. Der bevorzugte Zeitpunkt zur Zugabe des Stoppreagenz ist erreicht, wenn der Wasserstoffstrom nur noch ein 1/10 des Maximalwertes erreicht.

Die Isolierung des Produktes kann beispielsweise durch Kristallisation bei tiefen Temperaturen und nachfolgender Filtration oder durch Einengen der Reaktionsmischung erfolgen.

Die Charakterisierung der Endprodukte erfolgt durch Bestimmung der Molekulargewichtsverteilung mittels GPC sowie der Erweichungsbereiche. Rheologische Untersuchungen geben Aufschluss über den Grad der Vernetzung.

Es entstehen feste Polysilazane mit einem Molekulargewicht von mindestens 2000 g/mol bis 2 Mio g/mol, insbesondere von 10 000 g/mol bis 1 Mio g/mol. Der Vernetzungsgrad und damit der Erweichungsbereich kann durch die Wahl der Reaktionsbedingungen beliebig zwischen -15 °C und 180 °C eingestellt werden. Die erhaltenen Produkte sind bei ordnungsgemäßer Lagerung mindestens 12 Monate stabil und können jederzeit in gängigen polaren und unpolaren aprotischen Lösemitteln gelöst werden. Bei ungenügender Kontrolle der Reaktionsbedingungen werden unlösliche, unschmelzbare Stoffe erhalten.

Bevorzugte Lösemittel zum Lösen sind z. B. Ether (THF) und unpolare Kohlenwasserstoffe (Hexan, Petrolether).

Diese mit dem erfindungsgemäßen Verfahren hergestellten Polysilazane sind reproduzierbar herstellbar, thermisch stabil, schmelzbar und löslich und besitzen ein hohes Molekulargewicht. Sie zeichnen sich ferner dadurch aus, dass sie mindestens 12 Monate lagerstabil sind und sich mit den herkömmlichen industriellen Methoden, wie z. B. Extrusion, Spritzguss, Schmelzspinnen, Kalandrieren, Folien- und Hohlkörperblasen, Rotationsformen, Wirbelsintern, Flammspritzen und Spritzpressen (RTM bzw. DP-RTM), verarbeiten lassen.

### Beispiele

### Beispiel 1

Zu 3,0 kg KiON ML 33 und 1,5 kg THF werden bei Raumtemperatur innerhalb von 40 min eine Lösung von 27,1 g Tetrabutylammoniumfluorid (TBAF) gelöst mit 513 g THF zugegeben. Nach beendeter Zugabe wird noch 30 min nachgerührt und anschließend 7,5 g Ca(BH₄)₂ suspendiert in 133,5 g THF zugegeben. Die Mischung wird weitere 35 min gerührt. Abschließend wird das THF unter erhöhter Temperatur und vermindertem Druck entfernt. Es verbleiben 2,76 kg eines festen Polysilazans mit einem Erweichungspunkt ∼ 90 °C und einem M_{w} von 38.000 g/mol.

### Beispiel 2

Zu 100 g KiON ML 33 und 0,2 kg THF werden bei Raumtemperatur innerhalb von 40 min eine Lösung von 0,26 g TBAF gelöst mit 20 g THF zugegeben. Nach beendeter Zugabe wird noch 90 min nachgerührt und anschließend 0,25 g Ca(BH₄)₂ suspendiert in 5 ml THF zugegeben. Die Mischung wird weitere 30 min gerührt. Abschließend wird das THF unter erhöhter Temperatur und vermindertem Druck entfernt. Es verbleiben 87,9 g eines festen Polysilazans mit einem Erweichungspunkt ∼ 50 °C und einem M_{w} von 4190 g/mol.

### Beispiel 3

In einem mit Argon inertisierten 2 I-Vierhalskolben mit Rührer, Thermometer und Kühler werden 0,075 kg THF und 150 g von Leichtsiedern befreites KiON HTT 1800 vorgelegt. Innerhalb von 30 min wird eine Lösung von 0,375 mg TBAF gelöst in 27,16 ml THF zudosiert. Nach 30 min Nachrührzeit werden der Reaktionslösung 375 mg Ca(BH₄)₂ in 7,5 ml THF zugegeben und die Reaktion damit gestoppt. Nach Abtrennen des Lösemittels verbleibt ein weißer Feststoff der bei ca. 110 °C erstarrt und ein M_{w} von 116.000 g/mol besitzt.

### Beispiel 4

In einem mit Stickstoff inertisierten 1L Einhalskolben mit Magnetkern und Kühler werden bei RT 200 g THF, 100 g KiON HTT 1800 und 100 g KiON ML 33 vorgelegt. Die homogene Mischung wird innerhalb von 60 min mit einer Lösung bestehend aus 500 mg TBAF in 38,2 ml THF versetzt. Man rührt 30 min nach und stoppt mit 491 mg Ca(BH₄)₂ in 10 ml THF ab. Nach Destillation verbleibt ein Feststoff mit einem Erweichungpunkt von ca. 60 °C und einem Molekulargewicht M_{w} von 10.100 g/mol.

### Beispiel 5

In einem mit Argon inertisierten 1I-Einhalskolben mit Magnetkern und Kühler werden bei RT 200 g Diethylether und 100 g Ceraset PSZ 20 eingewogen und gut durchmischt. Es werden innerhalb von 5 min ein Mischung aus 1 ml 1M TBAF/THF Lösung und 19 ml Diethylether zugegeben. Nach 30 min Nachreaktion, Zugaben von 0,25 g Ca(BH₄)₂ in Diethylether und weiteren 30 min Rühren wird das Lösemittel entfernt. Es verbleibt eine bei 115 °C hochviskose Schmelze, die beim Abkühlen glasartig erstarrt. M_{w} = 21.300 g/mol.

### Beispiel 6

Ein inertisierter 500 ml Kolben wird mit 80 g Toluol und 40 g Ceraset PSZ 20 befüllt. Man gibt innerhalb von 10 min eine Lösung aus 0,4 ml 1M Tetrabutylammoniumhydroxid und 7,6 ml Toluol zu und rührt 25 min nach. Die Zugabe von 2 ml Toluol, in denen 0,1 g Ca(BH₄)₂ suspendiert ist, stoppt die Reaktion vollständig. Nach Abtrennen des Lösemittels verbleibt eine bei Raumtemperatur wachsartige Substanz, die ein M_{w} von 20.900 g/mol besitzt.

### Beispiel 7

In einem 4 I-Kolben werden 300 g THF mit 600 g KiON ML 33 vermischt. Man dosiert innerhalb von 30 min 6 ml einer 1M TBAF Lösung verdünnt mit 114 ml THF zu und lässt anschließend 30 min Nachrühren. Es wird mit 14 mmol LiBH₄ in 7 ml THF gestoppt. Nach Filtrieren und Abtrennen des Lösemittels wird eine glasartig erstarrende Schmelze erhalten. Das M_{w} beträgt 17.350 g/mol.

### Beispiel 8

0,22 ml einer 0,3 M Lösung von Tetrakis[tris(dimethylamino)phosphoranylidenamino]phosphonium-fluorid in Benzol werden in 40 ml THF vorgelegt und 10 g KiON HTT 1800 innerhalb von 10 min zugegeben. Nach Abstoppen mit Ca(BH₄)₂ und Abtrennen des Lösemittels wird ein Feststoff erhalten, dessen M_{w} bei 6200 g/mol liegt.

### Beispiel 9

In einem 4 I-Kolben werden 300 g THF mit 600 g KiON ML 33 vermischt. Man dosiert innerhalb von 30 min 6 ml einer 1M TBAF Lösung verdünnt mit 114 ml THF zu und lässt anschließend 30 min Nachrühren. Es wird mit 14 mmol NaH in 7 ml THF gestoppt. Nach Filtrieren und Abtrennen des Lösemittels wird eine glasartig erstarrende Schmelze erhalten. Das M_{w} beträgt 28.840 g/mol.

### Beispiel 10

90 g KiON HTT 1800 und 210 g THF werden vorgelegt und auf 0 °C gekühlt. Unter kräftigem Rühren werden innerhalb von 60 min 15 ml THF in denen 450 mg TBAF gelöst sind, zudosiert. Es wird 60 min bei 0 °C nachgerührt auf 20 °C erwärmt und dann mit 300 mg Ca(BH₄)₂ in 50 ml THF abgestoppt. Nach Abdestillieren des THF verbleibt ein wachsartiger Feststoff mit einem M_{w} von 1650 g/mol.

### Vergleichsbeispiel 1

In einem 4 I-Kolben werden 300 g THF mit 600 g KiON ML 33 vermischt. Man dosiert innerhalb von 30 min 6 ml einer 1M TBAF Lösung verdünnt mit 114 ml THF zu und lässt anschließend über Nacht nachrühren. Nach Filtrieren und Abdestillieren des Lösemittels verbleibt ein unlöslicher und unschmelzbarer Feststoff.

### Vergleichsbeispiel 2

In einem mit Stickstoff inertisierten 1L Einhalskolben mit Magnetkern und Kühler werden bei RT 200 g THF, 100 g KiON HTT 1800 und 100 g KiON ML 33 vorgelegt. Mischung wird innerhalb von 45 min mit einer Lösung bestehend aus 1500 mg TBAF in 38,2 ml THF versetzt. Nach 30 min Nachrühren ist ein sich bildender weißer Feststoff erkennbar, dessen Masse schnell zunimmt. Der Feststoff ist unlöslich und unschmelzbar.

### Vergleichsbeispiel 3

200 g KiON ML 33 werden in einem 500 ml 3 Dreihalskolben vorgelegt und unter kräftigem Rühren mit 5ml einer 1M TBAF / THF Lösung versetzt. Es bildet sich ein weißer Feststoff an der Eintropfstelle. Nach beendeter Zugabe wird 60 min nachgerührt und man erhält einen zweiphasigen Kolbeninhalt . Der abgetrennte Feststoff ist unlöslich und schmilzt nicht.

## Patentansprüche

1. Verfahren zur Herstellung von hochmolekularen, festen, schmelzbaren, thermoplastischen, präkeramischen Polymeren durch Umsetzung von flüssigen niedermolekularen Polysilazanen in einem Lösungsmittel, in Gegenwart eines Katalysators unter Abstoppung der Reaktion mit einem Abstoppreagenz sobald der gewünschte Polymerisationsgrad erreicht ist und dass als Stoppreagenz Hydride ausgewählt aus der Gruppe KH, NaH, LiH, CaH₂, LiAlH₄, Ca(BH₄)₂ und Na(BH₄) zum Einsatz kommen.

2. Verfahren nach Anspruch 1, **dadurch gekennzeichnet, dass** Polysilazane oder eine Mischung von Polysilazanen der allgemeinen Formel (1)
-(SiR'R"-NR"')ₙ- (1)
eingesetzt wird,
wobei R', R", R'" gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt
und n so bemessen ist, dass das Polysilazan ein zahlenmittleres Molekulargewicht von 150 bis 150.000 g/mol aufweist.

3. Verfahren nach Anspruch 2, **dadurch gekennzeichnet, dass** Polysilazane eingesetzt werden, in denen R', R", R'" unabhängig voneinander für einen Rest aus der Gruppe Wasserstoff, Methyl, Ethyl, Propyl, iso-Propyl, Butyl, iso-Butyl, tert.-Butyl, Phenyl, Tolyl, Vinyl oder 3-(Triethoxysilyl)-propyl, 3-(Trimethoxysilylpropyl) stehen.

4. Verfahren nach mindestens einem der vorhergehenden Ansprüche, **dadurch gekennzeichnet, dass** Perhydropolysilazane der Formel (2) verwendet werden 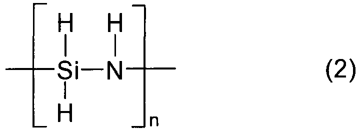 wobei es sich bei n um eine ganze Zahl handelt und n so bemessen ist, dass das Polysilazan ein zahlenmittleres Molekulargewicht von 150 bis 150.000 g/mol aufweist.

5. Verfahren nach mindestens einem der vorhergehenden Ansprüche, **dadurch gekennzeichnet, dass** als Katalysatoren Chloride, Bromide, lodide, Fluoride und Hydroxide von tetraalkylsubstituierten Ammoniumsalzen verwendet werden.

6. Verfahren nach mindestens einem der vorhergehenden Ansprüche, **dadurch gekennzeichnet, dass** die Konzentration des Katalysators in der Reaktionsmischung im Bereich von 0,01 Gew.-% und 10 Gew.-% liegt.

7. Verfahren nach mindestens einem der vorhergehenden Ansprüche, **dadurch gekennzeichnet, dass** als Lösemittel organische Lösemittel, die kein Wasser sowie keine reaktiven Gruppen enthalten, insbesondere aliphatische oder aromatische Kohlenwasserstoffe zum Einsatz kommen.

8. Verfahren nach mindestens einem der vorhergehenden Ansprüche, **dadurch gekennzeichnet, dass** die Konzentration der Ausgangsstoffe im Reaktionsmedium im Bereich von 20 - 80 Gew.% liegt.

## Claims

1. Method for producing high molecular weight solid meltable thermoplastic pre-ceramic polymers by reaction of liquid low molecular weight polysilazanes in a solvent, in the presence of a catalyst by stopping the reaction with a stopping reagent as soon as the desired degree of polymerization is attained and in that hydrides selected from the group consisting of KH, NaH, LiH, CaH₂, LiAlH₄, Ca(BH₄)₂ and Na(BH₄) are used as stopping reagent.

2. Method according to Claim 1, **characterized in that** it employs polysilazanes or a mixture of polysilazanes of general formula (1)
-(SiR'R"-NR"')ₙ- (1)
where R', R" and R'" are the same or different and each independently represent hydrogen or an optionally substituted alkyl, aryl, vinyl or (trialkoxysilyl)alkyl radical, where n represents an integer such that the polysilazane has a number-average molecular weight of 150 to 150 000 g/mol.

3. Method according to Claim 2, **characterized in that** it employs polysilazanes **characterized in that** R', R" and R"' each independently represent a radical selected from the group consisting of hydrogen, methyl, ethyl, propyl, isopropyl, butyl, isobutyl, tert-butyl, phenyl, tolyl, vinyl, 3-(triethoxysilyl)propyl and 3-(trimethoxysilylpropyl).

4. Method according to at least one of the preceding claims, **characterized in that** it employs perhydropolysilazanes of formula (2) 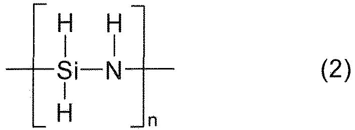 where n represents an integer such that the polysilazane has a number-average molecular weight of 150 to 150 000 g/mol.

5. Method according to at least one of the preceding claims, **characterized in that** chlorides, bromides, iodides, fluorides and hydroxides of tetraalkyl-substituted ammonium salts are used as catalysts.

6. Method according to at least one of the preceding claims, **characterized in that** the concentration of the catalyst in the reaction mixture is in the range from 0.01 wt% and 10 wt%.

7. Method according to at least one of the preceding claims, **characterized in that** the solvent used comprises organic solvents containing no water and also no reactive groups, in particular aliphatic or aromatic hydrocarbons.

8. Method according to at least one of the preceding claims, **characterized in that** the concentration of the starting materials in the reaction medium is in the range of 20 - 80 wt%.

## Revendications

1. Procédé pour la préparation de polymères précéramiques, thermoplastiques, fusibles, solides, à haut poids moléculaire par la transformation de polysilazanes liquides à bas poids moléculaire dans un solvant, en présence d'un catalyseur par l'arrêt de la réaction avec un réactif d'arrêt dès que le degré de polymérisation souhaité est atteint et en ce que des hydrures choisis dans le groupe KH, NaH, LiH, CaH₂, LiAlH₄, Ca(BH₄)₂ et Na (BH4) sont utilisés en tant que réactif d'arrêt.

2. Procédé selon la revendication 1, **caractérisé en ce que** des polysilazanes ou un mélange de polysilazanes de formule générale (1)
-(SiR'R"-NR"')ₙ- (1)
sont utilisés,
R', R", R"' étant identiques ou différents et représentant indépendamment les uns des autres hydrogène ou un radical alkyle, aryle, vinyle ou (trialcoxysilyl)alkyle éventuellement substitué, n étant un nombre entier et n étant mesuré de telle manière que le polysilazane présente un poids moléculaire moyen en nombre de 150 à 150.000 g/mole.

3. Procédé selon la revendication 2, **caractérisé en ce que** des polysilazanes sont utilisés, dans lesquels R', R", R"' indépendamment les uns des autres représentent un radical du groupe hydrogène, méthyle, éthyle, propyle, iso-propyle, butyle, iso-butyle, tert-butyle, phényle, tolyle, vinyle ou 3-(triéthoxysilyl)-propyle, 3-(triméthoxysilylpropyle).

4. Procédé selon au moins l'une quelconque des revendications précédentes, **caractérisé en ce que** des perhydropolysilazanes de formule (2) sont utilisés 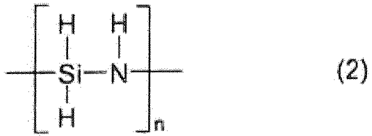 n étant un nombre entier et n étant mesuré de telle manière que le polysilazane présente un poids moléculaire moyen en nombre de 150 à 150.000 g/mole.

5. Procédé selon au moins l'une quelconque des revendications précédentes, **caractérisé en ce que** des chlorures, des bromures, des iodures, des fluorures et des hydroxydes de sels d'ammonium tétrasubstitués par alkyle sont utilisés en tant que catalyseurs.

6. Procédé selon au moins l'une quelconque des revendications précédentes, **caractérisé en ce que** la concentration du catalyseur dans le mélange réactionnel se situe dans la plage de 0,01 % en poids à 10 % en poids.

7. Procédé selon au moins l'une quelconque des revendications précédentes, **caractérisé en ce que** des solvants organiques, qui ne contiennent pas d'eau ainsi qu'aucuns groupes réactifs, en particulier des hydrocarbures aliphatiques ou aromatiques, sont utilisés en tant que solvant.

8. Procédé selon au moins l'une quelconque des revendications précédentes, **caractérisé en ce que** la concentration en matières premières dans le milieu réactionnel se situe dans la plage de 20 à 80 % en poids.
